# EUROPÄISCHE PATENTSCHRIFT

(11) **EP 2 839 740 B1**
(45) Veröffentlichungstag und Bekanntmachung des Hinweises auf die Patenterteilung: **22.02.2017**
(21) Anmeldenummer: 14181788.2
(22) Anmeldetag: 21.08.2014
(51) Int. Cl.: A01M 7/00

(54) **Verfahren zur Bewegungssteuerung und/oder Regelung einer landwirtschaftlichen Verteilvorrichtung**
Method for motion control, and/or regulation of an agricultural distribution device
Procédé de commande de mouvement et/ou de réglage d'un dispositif d'épandage agricole

(30) Priorität: 22.08.2013 DE 102013109086
(43) Veröffentlichungstag der Anmeldung: 25.02.2015
(73) Patentinhaber: HORSCH LEEB Application Systems GmbH, 94562 Oberpöring (DE)
(72) Erfinder: Hirthammer, Otto, 93128 Hirschling (DE); Leeb, Theodor, 94562 Oberpöring (DE)
(74) Vertreter: Benninger, Johannes

(56) Entgegenhaltungen:
- EP-A1- 2 186 405
- DE-A1- 4 140 254
- FR-A1- 2 690 811
- FR-A1- 2 734 499
- FR-A1- 2 965 454

## Beschreibung

Die vorliegende Erfindung betrifft ein Verfahren zur Bewegungssteuerung und/oder Regelung einer an einer landwirtschaftlichen Verteilmaschine angebrachten Verteilvorrichtung zum Ausbringen von flüssigen und/oder festen Wirkstoffen mit den Merkmalen des unabhängigen Anspruchs 1.

Feldspritzen und an Arbeitsmaschinen wie Traktoren angehängte Verteilvorrichtungen oder Spritzgestänge weisen teilweise sehr große Arbeitsbreiten von zwanzig Metern und mehr auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben. Da die an den Auslegern angeordneten und nach unten gerichteten Düsen zur Ausbringung des Spritzmittels jeweils einen definierten Spritzkegel aufweisen, ergibt sich aus einer veränderlichen Distanz der Düsen zum Boden eine ungleichmäßige Bedeckung des Ackers mit Spritzmittel. Auch steigt die Gefahr der Abdrift des Spritzmittels mit zunehmender Distanz der Spritzdüsen vom Boden stark an, da die zielgerichtete Verteilung fein verstäubter Tropfen bereits von geringen Luftbewegungen negativ beeinflusst wird. Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, sowie das Spritzgestänge dem Bodenrelief bzw. einer Bodenkontur nachzuführen, da bereits geringe Schrägstellungen des Spritzgestänges zu großen Abstandsdifferenzen der Düsen zum Boden führen.

Ein Verfahren zur Bewegungssteuerung oder Regelung eines Spritzgestänges ist aus dem Stand der Technik bereits bekannt. So wird in der EP 2 591 657 A1 eine fahrbare Vorrichtung zum Ausbringen von flüssigen und/oder festen Wirkstoffen beschrieben, die ein Ausbringgestänge umfasst, welches aus einem Mittelteil und seitlichen Auslegearmen besteht und an einem Aufhängepunkt schwenkbar gelagert ist. Zur Bewegungssteuerung ist das Mittelteil über wenigstens eine regelbare Stelleinrichtung mit einem Rahmenabschnitt gekoppelt. Die Stelleinrichtung stellt in einem ersten Betriebsmodus, in dem das Ausbringgestänge weitestgehend von Drehmomenten um die Schwenkachse durch den Aufhängepunkt, resultierend aus Fahrzeugbewegungen um die Fahrzeuglängsachse, wiederum nicht sichergestellt werden kann, dass sich die Ausleger symmetrisch zueinander bewegen.

Ein vorrangiges Ziel der vorliegenden Erfindung besteht darin, eine Verteilvorrichtung bzw. ein Spritzgestänge zum Ausbringen von festen und oder flüssigen Stoffen hinsichtlich der Verschwenkbewegungen seiner seitlichen Ausleger zu steuern und/oder zu regeln, dass das Verschwenken annähernd symmetrisch zu einem Mittelteil erfolgt, so dass das entkoppelt ist, eine weitgehend stellkraftfreie mechanische Verbindung her. Zudem leitet die Stelleinrichtung in einem zweiten Betriebsmodus bzw. in einem Verstellmodus, eine definierte Stellkraft oder ein definiertes Stellmoment zwischen dem Mittelteil und dem Rahmenabschnitt, zur Verschwenkung des Ausbringgestänges relativ zum Rahmen, ein. Dies geschieht weitgehend unabhängig von Störmomenten, die aus Fahrzeugbewegungen resultieren.

Zwar lässt sich mit dem oben beschriebenen System eine weitgehend parallele Führung des Spritzgestänges zu einer Bodenoberfläche realisieren. Allerdings ist damit kein Verfahren offenbart, das eine Anpassung von bspw. nur einer Seite oder einem Ausleger des Spritzgestänges ermöglicht.

Weiter sind durch die FR 2 734 499 A1 eine Verteilvorrichtung und ein Verfahren zur Anpassung der Verteilvorrichtung an die Bodenkontur offenbart. Die Verteilvorrichtung ist um einen Aufhängepunkt drehbar und/oder schwenkbar gelagert und weist Ausleger auf, die sich jeweils seitlich von einem Mittelteil der Verteilvorrichtung nach außen erstrecken. Die Verteilvorrichtung kann über Stellglieder um eine horizontale Achse verschwenkt werden und zwar derart, dass ihr Abstand in Bezug auf die Bodenkontur einen definierten Wert beibehält. Die Ausleger können dabei symmetrisch zueinander bewegt werden.

Weiterhin wird in der EP 2 186 405 A1 ein Spritzgestänge und ein Verfahren zu dessen Steuerung beschrieben, mittels dessen eine Anpassung des Spritzgestänges an ein Bodenrelief oder eine Bodenkontur nahezu ermöglicht werden soll. Das Spritzgestänge verfügt über mindestens zwei über Gelenke an einem Mittelteil angeordnete Ausleger, wobei diese Ausleger wiederum über horizontale Achsen schwenkbar zueinander angeordnet sind und die Ausleger mittels Gelenken verbunden sind, und eine Stellbewegung der Ausleger zueinander aktiv steuerbar ist. Die Stellbewegung wird mittels eines Stellgliedes ausgeführt, wobei dieses wiederum als hydraulisch arbeitender Zylinder ausgebildet sein kann.

Bei derartigen Spritzgestängen, bei denen die Ausleger mittels hydraulischer Zylinder um horizontale Achsen verschwenkt werden können, besteht das Problem, dass sich die Ausleger nicht immer symmetrisch zueinander bewegen. Werden etwa beide Ausleger verschwenkt, bewegen sich diese aufgrund der ungleichmäßigen Bewegungen der den jeweiligen Auslegern zugeordneten Zylinder nicht gleichmäßig zueinander, was wiederum ein Drehmoment auf die Gestängeaufhängung hervorruft, welches gedämpft werden muss und ebenso die Verteilung der Spritzflüssigkeit negativ beeinflusst. Zwar sind hierfür diverse Lösungsansätze bekannt, bspw. die Ansteuerung der Zylinder mittels Stromteilerventile, doch sind auch diese diversen Bauartbedingen Ungenauigkeiten unterworfen, wodurch Spritzgestänge in seiner Bewegungssteuerung an eine Bodenkontur angepasst werden kann.

Dieses Ziel wird durch ein Verfahren erreicht, das die Merkmale des Anspruchs 1 umfasst. Merkmale vorteilhafter Weiterbildungen der Erfindung ergeben sich aus den abhängigen Ansprüchen. Infolge dieser Maßnahmen werden zwei, um horizontale Achsen schwenkbar gelagerte und mit einem Mittelteil verbundene seitliche Ausleger mit Mitteln und/oder Koppelelementen in einer Weise gesteuert und/oder geregelt, dass die Bewegung von wenigstens einem Ausleger mit Hilfe der Mittel symmetrisch auf einen gegenüberliegenden Ausleger übertragen werden, wodurch erreicht wird, dass die Ausleger annähernd symmetrisch zum Mittelteil verschwenkt werden. Zudem kann vorgesehen sein, dass die Verteilvorrichtung um einen zentralen Aufhängepunkt drehbar gelagert ist, und eine Anpassung an eine Bodenkontur von wenigstens einem Ausleger durch symmetrisches Verschwenken beider Ausleger und Drehen der Verteilvorrichtung um den Aufhängepunkt erfolgt.

Die Anpassung des Spritzgestänge bzw. von wenigstens einem der zwei Ausleger an die Bodenkontur erfolgt durch das im Anspruch 1 vorgeschlagene Verfahren. Hierbei ist der Verteilvorrichtung bzw. der landwirtschaftlichen Verteilmaschine eine Istwerterfassung zugeordnet, welche zunächst die relativ Position der Verteilvorrichtung zu einer Bodenkontur oder Bodenoberfläche ermittelt. Die Istwerterfassung erfolgt hierbei bspw. mittels Ultraschallsensoren, welche an der dem Boden zugewandten Seite des Spritzgestänges angeordnet sind, um somit den aktuellen Abstand des Gestänges zur Bodenoberfläche zu ermitteln. Aber auch andere Arten von Sensoren wären denkbar. Ebenso könnte die Istwerterfassung auf Basis von GPS-Daten erfolgen. Die von der Istwerterfassung ermittelten Werte werden an eine Datenverarbeitungsvorrichtung oder an eine Rechnereinheit übertragen. Dies kann mittels einer Kabelverbindung oder auch kabellos erfolgen. Weichen die von der Istwerterfassung ermittelten Werte von einem vordefinierten Sollwert ab, so wird das Stellglied, zum Verschwenken der Ausleger von der Rechnereinheit angesteuert, bzw. es wird ein Signal ausgegeben, wodurch das Stellglied eine Positions- und/oder Längenänderung durchführt und somit eine Änderung der Relativposition der Ausleger durchführt, so dass sich beide Ausleger wiederum in Richtung zur Bodenoberfläche oder von dieser weg bewegen. Bei der Datenverarbeitungsvorrichtung bzw. der Rechnereinheit kann es sich prinzipiell um jede elektronische Vorrichtung handeln, die in der Lage ist, einen Soll-Ist-Wert-Vergleich durchzuführen und auf dessen Grundlage ein Signal oder einen Stellwert auszugeben. Bewährt haben sich hierfür computergestützte Systeme.

Wird von der Istwerterfassung ermittelt, dass nur eine einseitige Anpassung des Spritzgestänges an eine Bodenkontur erforderlich ist, werden wiederum zunächst beide Ausleger über das Stellglied und die Koppelelemente symmetrisch verschwenkt. Zusätzlich wird das Spritzgestänge noch über einen Aufhängepunkt bzw. eine Drehlagerung, mittels derer das Spritzgestänge mit einem Stützabschnitt bzw. einer landwirtschaftlichen Verteilmaschine verbunden ist, parallel zur Fahrtrichtung, im Uhrzeigersinn oder entgegengesetzt zum Uhrzeigersinn solange gedreht, bis die von der Istwerterfassung ermittelten Werte wieder nahezu mit den vordefinierten Sollwerten übereinstimmen. Das bedeutet, dass die Anpassung des Spritzgestänges an eine Bodenkontur vorzugsweise durch eine Kombination von symmetrischem Verschwenken der Ausleger und anschließendem Verdrehen des Spritzgestänges erfolgt. Wahlweise kann aber auch jeder Vorgang, also Verschwenken der Ausleger oder Verdrehen des Spritzgestänges separat ausgeführt werden.

Das Verschwenken des Spritzgestänges kann auf vielfältige Weise erfolgen, vorzugsweise mit einem zusätzlichen Stellantrieb, welcher wiederum von der Datenverarbeitungseinrichtung angesteuert wird. Als Stellantrieb kann bspw. ein Drehantrieb, welcher im Aufhängepunkt mit integriert ist, Verwendung finden. Auch wäre ein lineares Stellelement möglich, welches zum einen entfernt vom Aufhängepunkt mit dem Mittelteil verbunden ist und zum anderen über eine fahrzeugfeste Lagerung mit der landwirtschaftlichen Verteilmaschine verbunden ist.

Wie oben beschrieben, wird eine Anpassung von nur einem Ausleger an eine Bodenkontur durch eine Kombination aus einem symmetrischen Verschwenken der Ausleger und einem Verdrehen der Verteilvorrichtung erreicht, wobei dies keineswegs nacheinander durchgeführt werden muss. Es wäre auch vorstellbar, dass ein Verschwenken und ein Drehen nahezu zeitgleich erfolgt, wodurch zumindest eine nahezu Echtzeitanpassung an die Bodenoberfläche ermöglicht wird.

Es sei noch erwähnt, dass die erfindungsgemäße Koppelung der Ausleger auch an einer Verteilvorrichtung Anwendung finden kann, welche nicht über einem Aufhängepunkt gedreht werden kann.

Das erfindungsgemäße Verfahren dient der Bewegungssteuerung und/oder der Regelung der an einer landwirtschaftlichen Verteilmaschine angebrachten Verteilvorrichtung zum Ausbringen von flüssigen und/oder festen Wirkstoffen. Die Vorrichtung ist um einen ungefähr parallel zu einer Fahrtrichtung um einen Aufhängepunkt drehbar gelagert und ist mit einem Mittelteil und wenigstens zwei, über horizontale Schwenkachsen mit dem Mittelteil in Verbindung stehenden Auslegern ausgestattet. In einer Arbeitsposition erstreckt sich die Verteilvorrichtung quer zu einer Fahrtrichtung der Verteilmaschine. Außerdem sind den wenigstens zwei Auslegern Mittel zugeordnet, mittels derer die Ausleger symmetrisch zueinander bewegt werden können, wodurch die Verteilvorrichtung um einen Aufhängepunkt verdreht werden kann, wobei das Verdrehen der Verteilvorrichtung in Abhängigkeit der von einer Istwerterfassung ermittelten Relativposition in Bezug auf eine Bodenkontur erfolgt. Das erfindungsgemäße Verfahren kann zudem vorsehen, dass die von einer Istwerterfassung ermittelten Werte an eine Datenverarbeitungsvorrichtung übermittelt werden und mit in dieser hinterlegten Sollwerten verglichen werden und anhand der Differenz aus Ist- und Sollwert ein Verdrehen der Verteilvorrichtung um den Aufhängepunkt erfolgt.

Eine weitere Variante des erfindungsgemäßen Verfahrens sieht vor, dass das Verdrehen der Verteilvorrichtung mittels eines zwischen der Verteilmaschine und/oder dessen Stützabschnitt oder dessen Maschinenrahmen und dem Mittelteil angeordneten Drehantriebes oder durch lineare Stellbewegungen eines zwischen der Verteilmaschine und/oder dessen Stützabschnitt oder dessen Maschinenrahmen und dem Mittelteil angeordneten Linearantriebes durchgeführt wird. Das Verdrehen der Verteilvorrichtung kann je nach Bedarf jeweils im Uhrzeigersinn oder im Gegenuhrzeigersinn erfolgen.

Die Istwerterfassung kann mittels der Verteilvorrichtung zugeordneten Abstandssensoren oder Ultraschalsensoren erfolgen. Eine Anpassung an eine Bodenkontur kann durch ein symmetrisches oder annähernd symmetrisches Verschwenken der Ausleger um horizontale Schwenkachsen und ein Verdrehen der Verteilvorrichtung um einen Aufhängepunkt erfolgen. Die symmetrische oder annähernd symmetrische Verschwenkung der Ausleger und das Verdrehen der Verteilvorrichtung kann außerdem nahezu zeitgleich erfolgen. Ggf. kann jedoch das symmetrische oder annähernd symmetrische Verschwenken der Ausleger und das Verdrehen der Verteilvorrichtung auch nacheinander erfolgen.

Das erfindungsgemäße Verfahren eignet sich besonders für die Positionssteuerung und/oder Regelung der Auslegerarme einer Verteilvorrichtung zum Ausbringen von flüssigen und/oder festen Wirkstoffen wie Dünger, Spritzmittel o. dgl. Die Verteilvorrichtung kann insbesondere ein an einem selbstfahrenden oder gezogenen Fahrzeug angeordnetes, ungefähr parallel zu einer Fahrtrichtung um einen Aufhängepunkt schwenkbar gelagertes Ausbringgestänge mit einem Mittelteil und über horizontale Schwenkachsen schwenkbare seitliche Ausleger aufweisen. Die Länge der Ausleger kann je nach Verwendungszweck variieren. Typischerweise können die Ausleger mit einer Länge von ca. 12 bis 18 Metern für jeden Ausleger ausgebildet sein, so dass sich unter Berücksichtigung des Mittelteils mit ca. 2 bis 3 Metern Breite eine gesamte Arbeitsbreite des Spritzgestänges von bis zu 40 Metern oder mehr ergeben kann. Die seitlichen Ausleger werden mittels vertikaler Achsen mit dem Mittelteil verbunden. Mit diesen vertikalen Achsen können die Ausleger verschwenkt werden, und zwar zwischen einer ersten Arbeitsposition, in der die Ausleger und das Mittelteil annähernd in einer Linie quer zur Fahrtrichtung stehen, und einer zweiten Transportposition, in der die Ausleger zum Mittelteil so geklappt werden, dass eine für eine Straßenfahrt erforderliche Transportbreite erreicht wird.

Wenn im vorliegenden Zusammenhang von Schwenkbarkeit der Ausleger oder dem Drehen der Verteilvorrichtung ungefähr parallel zur Fahrrichtung die Rede ist, so sind damit andere Bewegungsfreiheitsgrade der Verteilvorrichtung nicht ausgeschlossen. Die vorliegende Erfindung bezieht sich allerdings nur auf Bewegungen parallel zur Fahrtrichtung, bei der die quer zur Fahrrichtung beidseitig an einem Mittelteil auskragenden Ausleger Auf- und Abbewegungen machen, oder bei der die Verteilvorrichtung im Uhrzeigersinn und/oder im Gegenuhrzeigersinn gedreht wird.

An den Auslegern und am Mittelteil sind in der Regel Spritzdüsen zum Ausbringen des jeweiligen Wirkstoffes oder Spritzmittels angebracht. Die Ausgestaltung dieser Spritzdüsen kann im Rahmen der vorliegenden Erfindung hinsichtlich der gewünschten Ausbringmenge pro Zeit oder pro Fläche des zu verteilenden Spritzmittels erfolgen. Das Erscheinungsbild des Spritzstrahls kann unterschiedliche Formen, wie bspw. fächerartige oder kegelartige Ausgestaltungen aufweisen. Die Ausgestaltung der Verteilvorrichtung mit mehreren unterschiedlichen Düsen ist ebenfalls möglich. Auch kann die Anzahl der Spritzdüsen je Ausleger bzw. je Verteilvorrichtung je nach deren Verwendungszweck variieren.

Das Spritzgestänge ist aus einem Mittelteil und wenigstens zwei seitlichen Auslegern gebildet. Die Verbindung erfolgt jeweils über Schwenkachsen oder Drehpunkte, welche anforderungsgerecht ausgestaltet werden müssen, um die durch das Gestänge auftretenden Kräfte aufnehmen zu können und zugleich noch eine ausreichende Flexibilität zu gewährleisten, damit das Spritzgestänge unter allen auftretenden Betriebsbedingungen vor Beschädigungen geschützt ist bzw. nicht beschädigt werden kann.

Um zusätzlich zum Schwenkvorgang der Ausleger oder des Spritzgestänges eine Höhenverstellbarkeit zu ermöglichen, ist zudem vorgesehen, ein Stützelement zwischen dem Maschinenrahmen der landwirtschaftlichen Verteilmaschine und dem Mittelteil des Spritzgestänges so auszuführen, dass dieses in deren Höhe verstellt werden kann. Um diesen Anforderungen gerecht zu werden, kann die Ausgestaltung des Stützelements bspw. durch parallel angeordnete Gestänge bzw. sog. Parallelogrammgestänge o. dgl. erfolgen. Auch zusätzliche vertikale Achsen wären vorstellbar, die so gestaltet sind, dass das Spritzgestänge über diese in deren Höhe verschiebbar wäre. An den Stützelementen wird das Mittelteil des Spritzgestänges über einen Aufhängepunkt montiert. Vorzugsweise geschieht dies mittels einer Drehlagerung, über die sich das Spritzgestänge drehen kann. Der Aufhängepunkt ist in der Regel so gewählt dass sich dieser im Schwerpunkt der Verteilvorrichtung befindet, wobei dieser in der Regel bei einer symmetrisch aufgebauten Verteilvorrichtung im Zentrum, also in der Mitte dieses parallel zur Fahrtrichtung befindet. Es wäre jedoch auch vorstellbar, den Aufhängepunkt außerhalb oder nicht im Schwerpunkt anzubringen.

Die Bewegungssteuerung der beiden Ausleger erfolgt mittels zumindest eines Stellgliedes, das zwischen den beiden Auslegern angebracht ist. Durch Positions- und/oder Längenänderungen des Stellglieds werden die Ausleger um die horizontalen Schwenkachsen, in Bezug auf die Bodenkontur, nach oben oder unten verschwenkt. Die Stellglieder können jeweils durch einen Hydraulikzylinder oder einen Hydraulikmotor ausgebildet sein. Der Hydraulikmotor kann je nach erwünschten Eigenschaften unterschiedlich ausgestaltet sein. Beispielsweise können im Rahmen der Erfindung für den Hydraulikmotor Radialkolbenmotoren, Axialkolbenmotoren oder Zahnradpumpen ihre Verwendung finden. Auch sind nichthydraulische Ausgestaltungen des Stellgliedes vorstellbar. Allerdings sind auch andere Stelleinrichtungen denkbar, bspw. elektromotorisch betriebene Linearmotoren oder dgl.

Die Anordnung des Stellgliedes kann auf vielfältige Weise erfolgen. So sieht die Erfindung vor, dass das Stellglied zwischen den beiden Auslegern montiert wird und diese dadurch verbunden werden. Es wäre aber auch vorstellbar, das Stellglied bspw. so zu montieren dass dieses nur mit einem Ausleger unmittelbar verbunden wäre.

Um eine symmetrische Bewegung der Ausleger zu erreichen, sind diese jeweils mit Mitteln bzw. mit Koppelementen wirkverbunden, so dass Schwenkbewegungen von wenigstens einem der Ausleger mit den Mitteln symmetrisch auf den gegenüberliegenden Ausleger übertragen werden. In einer bevorzugten Ausführungsform werden die Mittel bzw. die Koppelelemente aus einer Schwenkhebel-Koppelstangen-Anordnung gebildet. So sieht die Erfindung einen drehbar gelagerten Schwenkhebel vor, der mittig bzw. annähernd mittig drehbar zwischen den wenigstens zwei Auslegern angebracht wird. Der Schwenkhebel ist mit Gelenken versehen, an denen wiederum Koppelstangen angebracht werden können. So kann bspw. eine erste Koppelstange zwischen einem ersten Gelenk, welches sich vorne, in Bezug auf die Fahrtrichtung auf dem Schwenkhebel befindet und einem linken Ausleger angebracht werden. Außerdem kann eine zweite Koppelstange zwischen einem zweiten Gelenk, welches sich hinten, in Bezug auf die Fahrtrichtung auf dem Schwenkhebel befindet, und einem rechten Ausleger angebracht werden. Wahlweise wäre auch eine umgekehrte Anordnung möglich. Durch Positions- und/oder Längenänderungen des Stellglied und der daraus resultierenden Bewegung von zumindest einem der Ausleger erfolgt mittels der Koppelstange eine Übertragung dieser Bewegung über ein erstes oder zweites Gelenk auf den Schwenkhebel, wodurch dieser eine entsprechende Drehbewegung durchführt. Über das gegenüberliegende erste oder zweite Gelenk wird diese Drehbewegung durch die weitere Koppelstange auf den gegenüberliegenden Ausleger übertragen, wodurch die beiden Ausleger jeweils symmetrisch bzw. annähernd symmetrisch zueinander nach oben oder nach unten, in Bezug auf die Bodenoberfläche, verschwenkt werden.

Neben der beschriebenen Schwenkhebel-Koppelstangen-Anordnung wären auch noch diverse andere Koppelelemente oder -mittel vorstellbar. So wäre auch eine Koppelung mittels drehbaren Zahnrades und jeweils links und rechts dazu angebrachten Zahnstangen vorstellbar. Ebenso wären diverse andere mechanische Koppelelemente denkbar. Auch eine einteilige Gestaltung des Mittels wäre denkbar. Darüber hinaus könnten auch hydraulische Mittel Anwendung finden, vorzugsweise könnten bei einer derartigen Koppelung hydraulische Zylinder verwendet werden, die unter Verwendung eines Master-Slave-Prinzips gekoppelt sein können. Das heißt, dass deren Größe so konzipiert ist, dass durch Bewegung von wenigstens einem Ausleger zunächst Öl von einem Zylinder verdrängt wird und mittels dieser verdrängten Ölmenge ein weiterer Zylinder bewegt bzw. angesteuert wird. Auch elektronische Mittel könnten verwendet werden, welche bspw. durch Lagesensoren angesteuert werden. Generell kann die Koppelung auf verschiedenste Weise erfolgen, wobei diese jedoch stets so ausgeführt sein muss, dass eine nahezu spielfreie, symmetrische Übertragung der Schwenkbewegung von einem Ausleger auf einen gegenüberliegenden Ausleger gewährleistet werden kann.

Neben der symmetrischen Bewegung der Ausleger wird durch die erfindungsgemäße Koppelung der Ausleger auch die Gewichtsverteilung wesentlich verbessert, d.h. durch die Verbindung der Ausleger werden Gewichtsdifferenzen und dadurch hervorgerufene Drehmomente jeweils gegenseitig übertragen bzw. teilweise gegenseitig aufgehoben, wodurch sich der Schwerpunkt des Spritzgestänges stets annähernd im Zentrum zwischen den zwei Auslegern befindet, was bedeutet, dass bei einer Anordnung des Aufhängepunktes im Schwerpunkt auf diesen oder auf die Gestängeführung wesentlich geringere Kräfte wirken.

Darüber hinaus wird mit der erfindungsgemäßen Koppelung der zwei seitlichen Ausleger erreicht, dass zum Verschwenken dieser um die horizontale Achse nur noch lediglich ein Stellglied erforderlich ist.

Die Anpassung des Spritzgestänge bzw. von wenigstens einem der zwei Ausleger an die Bodenkontur kann dadurch erfolgen, dass der Verteilvorrichtung bzw. der landwirtschaftlichen Verteilmaschine eine Istwerterfassung zugeordnet ist, welche zunächst die relativ Position der Verteilvorrichtung zu einer Bodenkontur oder Bodenoberfläche ermittelt. Die Istwerterfassung erfolgt hierbei bspw. mittels Ultraschallsensoren, welche an der dem Boden zugewandten Seite des Spritzgestänges angeordnet sind, um somit den aktuellen Abstand des Gestänges zur Bodenoberfläche zu ermitteln. Aber auch andere Arten von Sensoren wären denkbar. Ebenso könnte die Istwerterfassung auf Basis von GPS-Daten erfolgen. Die von der Istwerterfassung ermittelten Werte werden an eine Datenverarbeitungsvorrichtung oder an eine Rechnereinheit übertragen. Dies kann mittels einer Kabelverbindung oder auch kabellos erfolgen. Weichen die von der Istwerterfassung ermittelten Werte von einem vordefinierten Sollwert ab, so wird das Stellglied, zum Verschwenken der Ausleger von der Rechnereinheit angesteuert, bzw. es wird ein Signal ausgegeben, wodurch das Stellglied eine Positions- und/oder Längenänderung durchführt und somit eine Änderung der Relativposition der Ausleger durchführt, so dass sich beide Ausleger wiederum in Richtung zur Bodenoberfläche oder von dieser weg bewegen. Bei der Datenverarbeitungsvorrichtung bzw. der Rechnereinheit kann es sich prinzipiell um jede elektronische Vorrichtung handeln, die in der Lage ist, einen Soll-Ist-Wert-Vergleich durchzuführen und auf dessen Grundlage ein Signal oder einen Stellwert auszugeben. Bewährt haben sich hierfür computergestützte Systeme.

Wird von der Istwerterfassung ermittelt, dass nur eine einseitige Anpassung des Spritzgestänges an eine Bodenkontur erforderlich ist, werden wiederum zunächst beide Ausleger über das Stellglied und die Koppelelemente symmetrisch verschwenkt. Zusätzlich wird das Spritzgestänge noch über einen Aufhängepunkt bzw. eine Drehlagerung, mittels derer das Spritzgestänge mit einem Stützabschnitt bzw. einer landwirtschaftlichen Verteilmaschine verbunden ist, parallel zur Fahrtrichtung, im Uhrzeigersinn oder entgegengesetzt zum Uhrzeigersinn solange gedreht, bis die von der Istwerterfassung ermittelten Werte wieder nahezu mit den vordefinierten Sollwerten übereinstimmen. Das bedeutet, dass die Anpassung des Spritzgestänges an eine Bodenkontur vorzugsweise durch eine Kombination von symmetrischem Verschwenken der Ausleger und anschließendem Verdrehen des Spritzgestänges erfolgt. Wahlweise kann aber auch jeder Vorgang, also Verschwenken der Ausleger oder Verdrehen des Spritzgestänges separat ausgeführt werden.

Das Verschwenken des Spritzgestänges kann auf vielfältige Weise erfolgen, vorzugsweise mit einem zusätzlichen Stellantrieb, welcher wiederum von der Datenverarbeitungseinrichtung angesteuert wird. Als Stellantrieb kann bspw. ein Drehantrieb, welcher im Aufhängepunkt mit integriert ist, Verwendung finden. Auch wäre ein lineares Stellelement möglich, welches zum einen entfernt vom Aufhängepunkt mit dem Mittelteil verbunden ist und zum anderen über eine fahrzeugfeste Lagerung mit der landwirtschaftlichen Verteilmaschine verbunden ist.

Wie oben beschrieben, wird eine Anpassung von nur einem Ausleger an eine Bodenkontur durch eine Kombination aus einem symmetrischen Verschwenken der Ausleger und einem Verdrehen der Verteilvorrichtung erreicht, wobei dies keineswegs nacheinander durchgeführt werden muss. Es wäre auch vorstellbar, dass ein Verschwenken und ein Drehen nahezu zeitgleich erfolgt, wodurch zumindest eine nahezu Echtzeitanpassung an die Bodenoberfläche ermöglicht wird.

Es sei noch erwähnt, dass die erfindungsgemäße Koppelung der Ausleger auch an einer Verteilvorrichtung Anwendung finden kann, welche nicht über einem Aufhängepunkt gedreht werden kann.

Im Folgenden sollen Ausführungsbeispiele die Erfindung und Ihre Vorteile anhand der beigefügten Figuren näher erläutern. Weitere Merkmale, Ziele und Vorteile der vorliegenden Erfindung gehen aus der nun folgenden detaillierten Beschreibung hervor, die als nicht einschränkendes Beispiel dient und auf die beigefügten Zeichnungen Bezug nimmt.
Fig. 1 zeigt eine schematische Perspektivansicht einer als selbstfahrende Feldspritze ausgeführten landwirtschaftlichen Verteilmaschine mit einer heckseitig angebauten Verteilvorrichtung bzw. einem Spritzgestänge.
Fig. 2 zeigt in zwei schematischen Detailansichten einen mittleren Bereich der Verteilvorrichtung, wie sie in Fig. 1 dargestellt ist.
Fig. 3 zeigt in zwei schematischen Heckansichten verschiede Auslenkstellungen und Bodenkontur-Anpassungen eines an der landwirtschaftlichen Verteilmaschine angebauten Spritzgestänges.

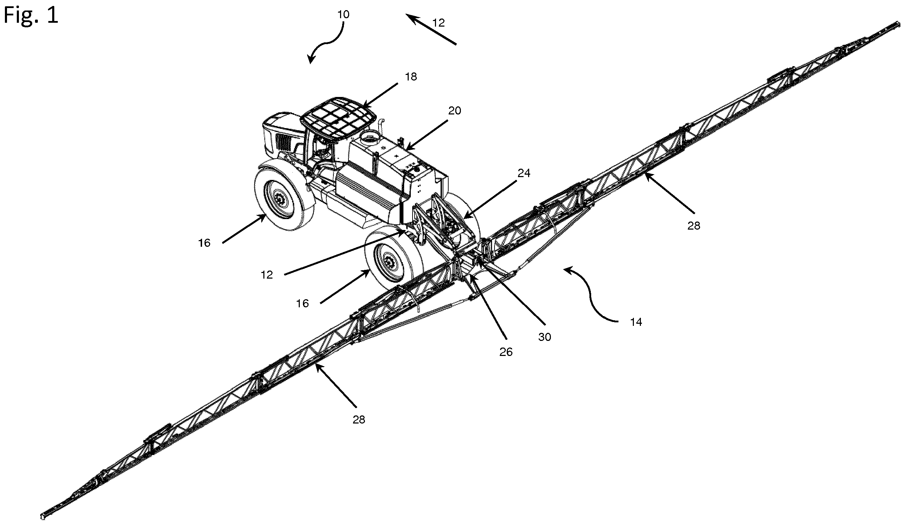

Gleiche oder gleich wirkende Elemente der Erfindung sind in den Figuren 1 bis 3 mit jeweils gleichen Bezugsziffern bezeichnet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren ausgestaltet sein kann und stellen keine abschließende Begrenzung dar.

Die nachfolgend näher erläuterten Figuren 1 bis 3 verdeutlichen eine bevorzugte Ausführungsform einer Verteilvorrichtung bzw. eines Spritzgestänge, wie es typischerweise an Arbeitsmaschinen, Zugmaschinen oder anderen Trägerfahrzeugen angehängt oder aufgesattelt sein kann. Solche Trägerfahrzeuge können bspw. Spezialfahrzeuge sein, die einen Tank für den auszubringenden Wirkstoff sowie die erfindungsgemäße Verteilvorrichtung tragen können. Als Zugfahrzeug kommen jedoch gleichermaßen herkömmliche landwirtschaftliche Zugmaschinen bzw. Traktoren in Frage.

Die schematische Perspektivansicht der Fig. 1 zeigt eine als selbstfahrende Feldspritze 10 ausgestaltete landwirtschaftliche Verteilmaschine 10 mit einer heckseitig angebauten Verteilvorrichtung 14 bzw. einem sich quer zur Fahrtrichtung 12 ersteckenden Spritzgestänge 14 in Arbeitsposition. Die Verteilvorrichtung 14 dient zum Ausbringen von flüssigen und/oder festen Wirkstoffen wie bspw. Dünger oder Pflanzenschutzmitteln. Die Feldspritze 10 besteht im Wesentlichen aus zwei Fahrzeugachsen 16, einer Kabine 18 und aus einem Vorratsbehälter 20, wobei wiederum alle Komponenten mittels eines Maschinenrahmens 22 verbunden werden. Im hinteren Bereich der Feldspritze 10 ist über einen Stützabschnitt 24 das Spritzgestänge 14 mit dem Maschinenrahmen 22 verbunden. Ein derartiger Stützabschnitt 24 kann entweder ein fahrzeugfestes Rahmenelement sein, das bspw. durch einen Maschinenrahmen gebildet wird. In bevorzugter Weise ist der Stützabschnitt 24 jedoch höhenverstellbar gegenüber einem Maschinenrahmen angebracht, wobei im aufgeführten Beispiel der Stützabschnitt 24 als Viergelenkanordnung ausgeführt ist.

Das Spritzgestänge 14 umfasst ein Mittelteil 26 mit einem Aufhängepunkt 30, mit dem das Spritzgestänge 14 drehbar mit dem Stützabschnitt 24 verbunden wird, sowie beidseitig daran befestigte Ausleger 28, die wahlweise ein- oder mehrfach klappbar ausgebildet sein können, um bspw. in eine für eine Straßen- oder Transportfahrt geeignete Anordnung gebracht werden zu können. An den Auslegern 28 oder den Auslegearmen, sowie am Mittelteil 26 können bspw. eine Vielzahl von hier nicht dargestellten Spritzdüsen zum gleichmäßigen und/oder gesteuerten Ausbringen von flüssigem Spritzmittel oder anderem Ausbringgut angeordnet sein.

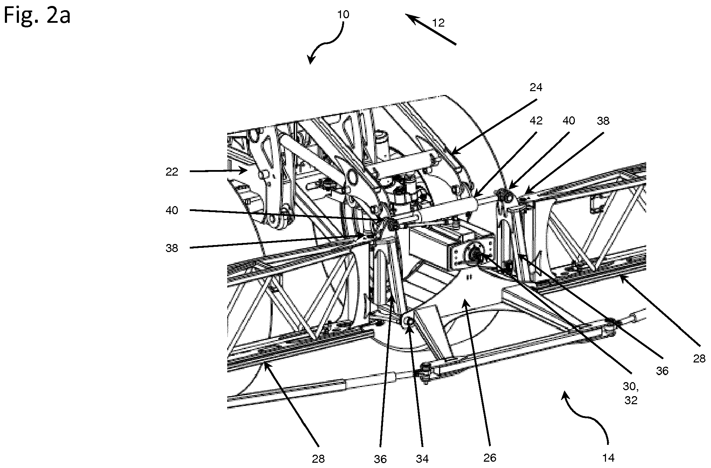

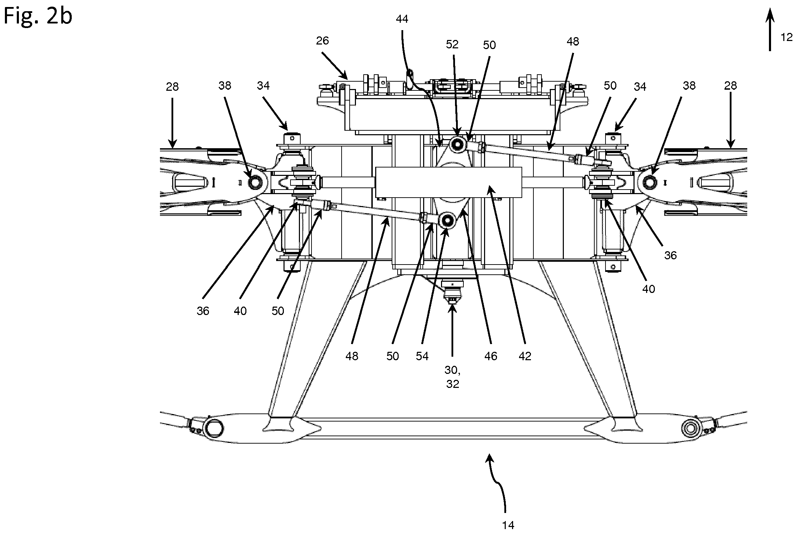

Die schematischen Detailansichten der Figuren 2a und 2b zeigen jeweils den mittleren Bereich einer Verteilvorrichtung 14, wobei wiederum die Fig. 2a dieses in einer schematischen Perspektivansicht und die Fig. 2b dieses in einer schematischen Draufsicht wiedergeben. Die Verteilvorrichtung 14 ist über einen Stützabschnitt 24 mit einem Maschinenrahmen 22 verbunden, wobei der Stützabschnitt 24 als höhenverstellbare Viergelenkanordnung ausgeführt ist. Das Mittelteil 26 des Spritzgestänges 14 ist mit einem Aufhängepunkt 30 versehen; im aufgeführten Beispiel ist dieser als Drehlagerung 30 gestaltet. Mittels dieses Aufhängepunktes wird das Mittelteil 26 bzw. das Spritzgestänge 14 drehbar mit dem Stützabschnitt 24 verbunden. Vorzugsweise ist die Drehlagerung 30 so angebracht, dass sich diese in etwa im Schwerpunkt des Spritzgestänges 14 befindet, wobei sich dieser in der Regel mittig vom Verteilergestänge 14 befindet. Es wäre jedoch auch denkbar, den Aufhängepunkt 30 außerhalb des Schwerpunkts zu platzieren. Beidseitig des Mittelteils 26 sind jeweils über horizontale Schwenkachsen 34 drehbar gelagerte Flanschböcke 36 angebracht. Zusätzlich sind die Flanschböcke 34 mit vertikalen Schwenkachsen 38 versehen, an denen jeweils seitliche Ausleger 28 montiert werden. Über die vertikalen Schwenkachsen 38 kann das Spritzgestänge 14 verschwenkt werden, und zwar zwischen einer ersten Arbeitsposition, in der die Ausleger 28 und das Mittelteil 26 annähernd in einer Linie quer zur Fahrtrichtung 12 stehen, und einer zweiten Transportposition, in der die Ausleger 28 zum Mittelteil 26 so verschwenkt werden, dass eine für eine Transportfahrt maximal zulässige Breite nicht überschritten wird. Dieses Verschwenken kann bspw. mittels Hydraulikzylinder erfolgen, aber auch andere Stellelemente wären vorstellbar. Es sei hierbei noch erwähnt, dass die horizontalen Schwenkachsen 34 sowie die vertikalen Schwenkachsen 38 jeweils so gestaltet sein müssen, dass diese die durch das Spritzgestänge 14 hervorgerufenen Belastungen bspw. durch Bewegungen der Feldspritze 10 aufnehmen und ggf. abdämpfen können. Eine derartige Gestaltung ist jedoch nicht Teil dieser Erfindung, weshalb hierauf nicht näher eingegangen wird.

Über die horizontalen Schwenkachsen 34 können die Ausleger 28 in Bezug auf das Mittelteil 26 bzw. die Feldspritze 10 in Richtung zu einer Bodenoberfläche oder von dieser weg bewegt werden. Wobei hierfür in einem oberen Bereich der beiden Flanschböcke 36 Gelenkpunkte 40 angebracht sind, mittels derer wenigstens ein Stellglied 42 montiert werden kann, und wodurch die beiden Flanschböcke 36 bzw. die beiden Ausleger 28 gemeinsam verbunden werden. Vorzugsweise wird das Stellglied 42, wie in den Figuren 2a und 2b dargestellt, so angebracht, dass die beiden Flanschböcke 36 über dieses verbunden werden. Es wäre jedoch auch vorstellbar, dass das Stellglied 42 so angebracht ist, dass dieses nur mit einem der Flanschböcke 36 verbunden wird. Vorzugsweise wird das Stellglied 42 durch einen Hydraulikzylinder oder einen Hydraulikmotor gebildet. Der Hydraulikmotor kann je nach erwünschten Eigenschaften unterschiedlich ausgestaltet sein. Beispielsweise können im Rahmen der Erfindung für den Hydraulikmotor Radialkolbenmotoren, Axialkolbenmotoren oder Zahnradpumpen ihre Verwendung finden. Auch wäre eine nichthydraulische Ausgestaltung, bspw. elektromotorisch betriebene Linearmotoren, des Stellgliedes 42 vorstellbar. Im aufgeführten Beispiel erfolgt das Verschwenken der Ausleger in Abhängigkeit der Einbaulänge des Stellgliedes 42, d.h. wird das Stellglied 42 so bewegt, dass es deren Einbaulänge verringert, so wird zumindest einer der Ausleger 28 nach oben bzw. von der Bodenoberfläche weg bewegt. Wird die Einbaulänge vergrößert, wird zumindest ein Ausleger 28 nach unten, also in Richtung zur Bodenoberfläche bewegt.

Wie im aufgeführten Beispiel dargestellt, sieht die Verteilvorrichtung 14 als Verbindungselement zwischen dem Mittelteil 26 und den zwei Auslegern 28 einen zusätzlichen Flanschbock 36 vor, welcher zum einen mit horizontalen Schwenkachsen 34 und zum anderen mit vertikalen Schwenkachsen 38 versehen ist. Darüber hinaus weist dieser im oberen Bereich noch Gelenkpunkte 40 auf, an denen wiederum das Stellglied 42 montiert werden kann. Eine derartige Gestaltung ist jedoch im Rahmen der Erfindung nicht zwingend erforderlich; es wären auch andere Verbindungen zwischen den Auslegern 28 und dem Mittelteil 26 vorstellbar.

Um zum einen zu erreichen, dass die Bewegung der beiden seitlichen Ausleger 28 symmetrisch zueinander erfolgt, und zum anderen dass sich der Schwerpunkt der Verteilvorrichtung 14 annähernd in der Mitte des befindet, sind den Auslegern 28 bzw. den Flanschböcken 36 Mittel 44 zugeordnet, mittels derer die Ausleger wirkverbunden werden. Wobei diese Mittel bzw. Koppelelemente 44 im dargestellten Ausführungsbeispiel der Figuren zwei aus einer Schwenkhebel 46 - Koppelstangen 48 Anordnung zusammengesetzt sind.

Hierbei ist ein Schwenkhebel 46 mittig bzw. annähernd mittig zwischen den Flanschböcken 36 drehbar gelagert angebracht. Dem Schwenkhebel 46 sind ein, in Fahrtrichtung vorne gelegenes erstes Gelenk 52 und ein in Fahrtrichtung hinten gelegenes zweites Gelenk 54 zugeordnet. An diesen Gelenken 52, 54 wird jeweils eine Koppelstange 48 angebracht. Wobei eine erste Koppelstange 48 zwischen dem ersten Gelenk 52 und einem Gelenkpunkt 40 des rechten Flanschbock 36 und eine zweite Koppelstange 48 zwischen dem zweiten Gelenk 52 und einem Gelenkpunkt 40 des linken Flanschbock 36 montiert werden. Die Koppelstangen sind an deren Enden jeweils mit zusätzlichen Kugelgelenken 50 versehen, um ggf. axiale oder radiale Versatze ausgleichen zu können. Wird durch Längenänderung des Stellglied 42 zumindest einer der Ausleger 28 bewegt, wird diese Bewegung mittels der, diesem Ausleger 28 zugeordneten, Koppelstange 48 auf den Schwenkhebel 46 übertragen, wodurch dieser eine Drehbewegung, im Uhrzeigersinn oder entgegengesetzt zum Uhrzeigersinn ausführt. Durch diese Drehbewegung wird die Bewegungsrichtung umgekehrt und über die zweite Koppelstange 48, welche dem sich noch in Ruhelage befindlichen Ausleger 28 zugeordnet ist, wird die Bewegung auf den anderen Ausleger 28 bzw. Flanschbock 36 übertragen.

Durch eine derartige Koppelung der Ausleger 28 mit Koppelelementen 44 wird erreicht, dass annähernd jegliche Bewegung, die einer der Ausleger 28 in Richtung zu einer Bodenkontur und von einer Bodenkontur weg ausführt, jeweils symmetrisch auf den sich zunächst nicht bewegenden Ausleger 28 übertragen wird. Darüber hinaus wird durch die erfindungsgemäße Koppelung erreicht, dass die Gewichtsverteilung des Spritzgestänges 14 und damit das auf die Drehlagerung 30 und den Stützabschnitt 24 wirkende Drehmoment stark verringert wird, dass sich Gewichtsdifferenzen zwischen den Auslegern 28 durch die Koppelung jeweils gegenseitig übertragen lassen.

Es sei noch erwähnt, dass die Ausgestaltung der Koppelelemente 44 als Schwenkhebel 46 - Koppelstangen 48 Anordnung nur ein Beispiel wiedergibt. Generell könnten die Koppelelemente 44 auch anders gestaltet werden. Auch könnten andere Mittel 44 zur Koppelung wie bspw. elektrische oder hydraulisch betätigte Mittel 44 angewendet werden. Wichtig bei der Auswahl der Mittel 44 zur Koppelung ist lediglich, dass diese so ausgeführt sind, dass zum einen eine annähernd symmetrische Bewegung der Ausleger 28 zueinander gewährleistet ist und zum anderen, dass zum Verschwenken der zwei Ausleger 28 vorzugsweise nur noch ein Stellglied 42 erforderlich ist.

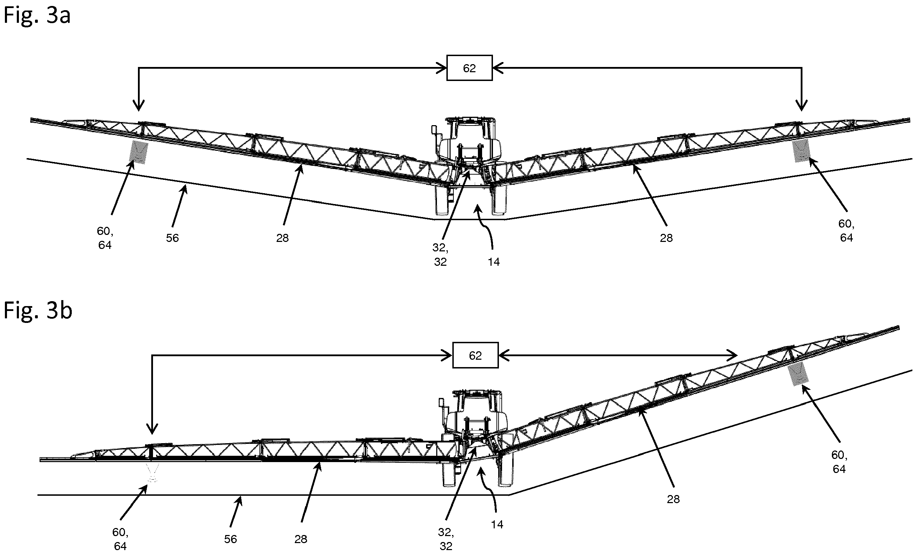

Die schematischen Darstellungen der Figuren 3 (Fig. 3a und Fig. 3b) verdeutlichen jeweils eine Heckansicht auf ein heckseitig an der Verteilmaschine 10 angebrachtes Spritzgestänge 14. Wobei in der Fig. 3a dieses zunächst symmetrisch verschwenkt und entlang einer Bodenkontur 56 geführt wird, und wobei in der Fig. 3b dieses nur auf der rechten Seite verschwenkt wird um entlang einer Bodenkontur 56 geführt zu werden.

So sind an den Auslegern 28 jeweils eine Istwerterfassung 60 in Form von Abstandssensoren 64 angebracht, welche den tatsächlichen Abstand des Spritzgestänges 14 bzw. der Ausleger 28 zu einer Bodenkontur erfasst. Die ermittelten Werte werden anschließend an eine Rechnereinheit 62 übermittelt und mit einem in der Rechnereinheit 62 hinterlegten Sollwert verglichen. Wobei die Übermittlung mittels Kabelverbindung aber auch kabellos erfolgen kann. Anhand der Differenz zwischen Sollwert und Istwert wird zunächst von der Rechnereinheit 62 ermittelt, ob und in welche Richtung bspw. die Ausleger 28 verschwenkt werden müssen. Liegt, wie in Fig. 3a dargestellt, eine Bodenkontur 56 vor, bei der beide Ausleger 28 symmetrisch zueinander verschwenkt werden müssen, wird das Stellglied 42 von der Rechnereinheit 62 angesteuert, und das Stellglied 42 führt eine Positions- bzw. Längenänderung durch, wodurch wiederum die beiden Ausleger 28 symmetrisch zueinander nach oben, also von der Bodenkontur weg bewegt werden. Dies geschieht solange, bis die von der Istwerterfassung 60 ermittelten Werte wieder den in der Rechnereinheit 62 hinterlegten Sollwerten entsprechen.

Liegt eine Bodenkontur 56 wie in Fig. 3b dargestellt vor, werden zunächst wiederum die zwei Ausleger 28 mit dem Stellglied 42 und den Koppelelementen 44 symmetrisch zueinander verschwenkt; zusätzlich wird das Spritzgestänge 14 über den Aufhängepunkt bzw. die Drehlagerung 30 gedreht. Die Drehung des Spritzgestänges 14 erfolgt wiederum in Abhängigkeit der von der Istwerterfassung 60 aktuell vorliegenden Position des Spritzgestänges 14. Die Drehung des Spritzgestänges 14 erfolgt wie in Fig. 3b dargestellt im Gegenuhrzeigersinn, wobei natürlich bei entsprechender Bodenkontur 56 auch eine Drehung im Uhrzeigersinn möglich wäre. Die Drehung des Spritzgestänges 14 erfolgt wiederum solange, bis die von der Istwerterfassung 60 ermittelten Positionsangaben wieder mit den in der Rechnereinheit 62 hinterlegten Sollwerten übereinstimmen.

Um das Spritzgestänge 14 drehen zu können, sind verschiedene Ansätze vorstellbar. So könnte bspw. die Drehlagerung 30 mit einem Drehantrieb 32 versehen werden. Dieser Drehantrieb 32 kann wiederum von der Rechnereinheit 62 angesteuert werden. Auch ein zusätzliches Stellelement, welches zum einen entfernt von Aufhängepunkt 30 mit dem Mittelteil 26 verbunden ist, und zum anderen über eine fahrzeugfeste Lagerung mit der Feldspritze 10 verbunden ist, typischerweise mit dem Maschinenrahmen 22 oder dem Stützabschnitt 24.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: landwirtschaftliche Verteilmaschine, Feldspritze
- 12: Fahrtrichtung
- 14: Verteilvorrichtung, Spritzgestänge
- 16: Fahrzeugachse
- 18: Kabine
- 20: Vorratsbehälter
- 22: Maschinenrahmen
- 24: Stützabschnitt
- 26: Mittelteil
- 28: Ausleger
- 30: Drehlagerung, Aufhängepunkt
- 32: Drehantrieb
- 34: Horizontale Schwenkachse
- 36: Flanschbock
- 38: Vertikale Schwenkachse
- 40: Gelenkpunkt
- 42: Stellglied
- 44: Koppelelement, Mittel
- 46: Schwenkhebel
- 48: Koppelstange
- 50: Kugelgelenk
- 52: erstes Gelenk
- 54: zweites Gelenk
- 56: Bodenkontur
- 60: Istwerterfassung
- 62: Datenverarbeitungsvorrichtung, Rechnereinheit
- 64: Abstandsensor

## Patentansprüche

1. Verfahren zur Bewegungssteuerung und/oder Regelung einer an einer landwirtschaftlichen Verteilmaschine (10) angebrachten Verteilvorrichtung (14) zum Ausbringen von flüssigen und/oder festen Wirkstoffen, wobei diese um einen parallelen und/oder ungefähr parallel zu einer Fahrtrichtung (12) angeordneten Aufhängepunkt (30) drehbar und/oder schwenkbar gelagert ist, mit einem Mittelteil (26) und wenigstens zwei, über horizontale Schwenkachsen mit dem Mittelteil (26) in Verbindung stehenden Auslegern (28-1, 28-2), wobei sich die Verteilvorrichtung (14) in einer Arbeitsposition quer zu einer Fahrtrichtung (12) der Verteilmaschine (10) erstreckt, wobei den wenigstens zwei Auslegern (28-1, 28-2) Mittel (44) zugeordnet sind, mittels derer die Ausleger (28-1, 28-2) symmetrisch und/oder annähernd symmetrisch zueinander bewegt werden, wobei die Verteilvorrichtung (14) um einen Aufhängepunkt (30) verdrehbar und/oder verschwenkbar ist, und wobei das Verdrehen und/oder Verschwenken der Verteilvorrichtung (14) in Abhängigkeit der von einer Istwerterfassung (60) ermittelten Relativposition in Bezug auf eine Bodenkontur (56) erfolgt, **dadurch gekennzeichnet, dass** den wenigstens zwei Auslegern (28-1 und 28-2) Mittel (44) derartig zugeordnet sind, dass eine Gewichtsübertragung von einem Ausleger (28-1 oder 28-2) auf den jeweiligen gegenüberliegenden Ausleger (28-2 bzw. 28-1) erfolgt.

2. Verfahren nach Anspruch 1, bei dem von einer Istwerterfassung (60) ermittelte Werte an eine Datenverarbeitungsvorrichtung (62) übermittelt werden und mit in dieser hinterlegten Sollwerten verglichen werden und anhand der Differenz aus Ist- und Sollwert ein Verdrehen und/oder Verschwenken der Verteilvorrichtung (14) um den Aufhängepunkt (30) erfolgt.

3. Verfahren nach Anspruch 1 oder 2, bei dem das Verdrehen und/oder Verschwenken der Verteilvorrichtung (14) mittels eines zwischen der Verteilmaschine (10) und/oder deren Stützabschnitt (24) oder deren Maschinenrahmen (22) und dem Mittelteil (26) angeordneten Drehantriebes (32) oder durch lineare Stellbewegungen eines zwischen der Verteilmaschine (10) und/oder deren Stützabschnitt (24) oder deren Maschinenrahmen (22) und dem Mittelteil (26) angeordneten Linearantriebes durchgeführt wird.

4. Verfahren nach einem der Ansprüche 1 bis 3, bei dem das Verdrehen und/oder das Verschwenken der Verteilvorrichtung (14) im Uhrzeigersinn oder im Gegenuhrzeigersinn erfolgt.

5. Verfahren nach einem der Ansprüche 1 bis 4, bei dem die Istwerterfassung (60) mittels der Verteilvorrichtung (14) zugeordneten Abstandssensoren (64) und/oder Ultraschallsensoren erfolgt.

6. Verfahren nach einem der Ansprüche 1 bis 5, bei dem eine Anpassung an eine Bodenkontur (56) durch ein symmetrisches oder annähernd symmetrisches Verschwenken der Ausleger (28) um horizontale Schwenkachsen (34) und ein Verdrehen der Verteilvorrichtung (14) um einen Aufhängepunkt (30) erfolgt.

7. Verfahren nach Anspruch 6, bei dem das symmetrische oder annähernd symmetrische Verschwenken der Ausleger (28) und das Verdrehen und/oder Verschwenken der Verteilvorrichtung (14) nahezu zeitgleich erfolgen.

8. Verfahren nach Anspruch 6, bei dem das symmetrische oder annähernd symmetrische Verschwenken der Ausleger (28) und das Verdrehen und/oder Verschwenken der Verteilvorrichtung (14) nacheinander erfolgen.

9. Verfahren nach einem der Ansprüche 1 bis 8, bei dem wenigstens ein Stellglied (42) mit wenigstens einem der Ausleger (28-1 oder 28-2) verbunden ist, und dieser aufgrund einer Positions- und/oder Längenänderung des Stellgliedes (42) um die horizontale Schwenkachse (34) verschwenkt wird.

10. Verfahren nach Anspruch 9, bei dem das wenigstens eine Stellglied (42) mit beiden Auslegern (28-1 und 28-2) verbunden ist, wobei wenigstens einer der Ausleger (28-1 und/oder 28-2) aufgrund einer Positions- und/oder Längenänderung des Stellgliedes (42) um die horizontale Schwenkachse (34) verschwenkt wird.

## Claims

1. A method for the motion control and/or regulation of a distribution apparatus (14) for spreading liquid and/or solid active agents, the distribution apparatus being arranged at an agricultural distribution machine (10), wherein this distribution apparatus (14) is mounted to be rotatable and/or pivotable about a suspension point (30), which is arranged approximately parallel to a driving direction (12), the distribution apparatus (14) having a middle part (26) and at least two cantilevers (28-1, 28-2), which are in connection to the middle part (26) via horizontal pivoting axes, wherein the distribution apparatus (14) extends transversely to a driving direction (12) of the distribution machine (10) when the distribution apparatus (14) is in a work position, wherein means (44) are assigned to the at least two cantilevers (28-1, 28-2), by way of which means (44) the cantilevers (28-1, 28-2) are moved symmetrically and/or approximately symmetrically in relation to each other, wherein the distribution apparatus (14) is mounted to be rotatable and/or pivotable about a suspension point (30), and wherein the torsion and/or pivot of the distribution apparatus (14) is carried out based on the relative position in relation to a ground contour (56), which relative position is determined by an actual value detection (60), **characterised in that** the means (44) are assigned to the at least two cantilevers (28-1 and 28-2) in such a manner that a weight transfer is carried out from one cantilever (28-1 or 28-2) onto the respective oppositely positioned cantilever (28-2 or 28-1, as the case may be).

2. The method as recited in claim 1, in which values determined by an actual value detection (60) are transmitted to a data processing device (62) and compared to desired values stored in it, and a torsion and/or pivot of the distribution apparatus (14) about the suspension point (30) is carried out by way of the difference between actual value and desired value.

3. The method as recited in claim 1 or 2, in which the torsion and/or pivot of the distribution apparatus (14) is carried out by means of a rotary actuator (32) arranged between the distribution machine (10) and/or its support section (24) or its machine frame (22) and the middle part (26) or by way of linear setting movements of a linear actuator arranged between the distribution machine (10) and/or its support section (24) or its machine frame (22) and the middle part (26).

4. The method as recited in one of the claims 1 to 3, in which the torsion and/or the pivot of the distribution apparatus (14) is carried out clockwise or counterclockwise.

5. The method as recited in one of the claims 1 to 4, in which the actual value detection (60) is carried out by means of distance sensors (64) and/or ultrasonic sensors assigned to the distribution apparatus (14).

6. The method as recited in one of the claims 1 to 5, in which an adaptation to a ground contour (56) is carried out by way of a symmetrical or approximately symmetrical pivot of the cantilevers (28) about horizontal pivoting axes (34) and a torsion of the distribution apparatus (14) about a suspension point (30).

7. The method as recited in claim 6, in which the symmetrical or approximately symmetrical pivot of the cantilevers (28) and the torsion and/or pivot of the distribution apparatus (14) are carried out nearly simultaneously.

8. The method as recited in claim 6, in which the symmetrical or approximately symmetrical pivot of the cantilevers (28) and the torsion and/or pivot of the distribution apparatus (14) are carried out successively.

9. The method as recited in one of the claims 1 to 8, in which at least one actuator (42) is connected to at least one of the cantilevers (28-1 or 28-2), and this cantilever (28-1 or 28-2) is pivoted about the horizontal pivoting axis (34) due to a position change and/or length change of the actuator (42).

10. The method as recited in claim 9, in which the at least one actuator (42) is connected to both cantilevers (28-1 and 28-2), wherein at least one of the cantilevers (28-1 and/or 28-2) is pivoted about the horizontal pivoting axis (34) due to a position change and/or length change of the actuator (42).

## Revendications

1. Procédé de commande de mouvement et/ou de réglage d'un dispositif de distribution (14) monté sur une machine agricole de distribution (10) et destiné à épandre des principes actifs liquides et/ou solides, celui-ci étant logé à rotation et/ou à pivotement autour d'un point de suspension (30) parallèle et/ou disposé de manière à peu près parallèle à un sens de marche (12), comprenant une partie centrale (26) et au moins deux flèches (28-1, 28-2) en communication avec ladite partie centrale (26), par l'intermédiaire d'axes de pivotement horizontaux, dans lequel ledit dispositif de distribution (14) s'étend, dans une position de travail, transversalement à un sens de marche (12) de la machine de distribution (10), dans lequel des moyens (44) sont associés auxdites au moins deux flèches (28-1, 28-2), par le biais desquels les flèches (28-1, 28-2) sont déplacées symétriquement et/ou de manière approximativement symétrique les unes par rapport aux autres, dans lequel le dispositif de distribution (14) peut tourner et/ou pivoter autour d'un point de suspension (30), et dans lequel la rotation et/ou le pivotement du dispositif de distribution (14) se fait en fonction de la position relative par rapport à un contour de sol (56), qui est déterminée par une détection de valeurs réelles (60), **caractérisé par le fait que** des moyens (44) sont associés auxdites au moins deux flèches (28-1 et 28-2) de telle sorte qu'il se produit une transmission de poids d'une flèche (28-1 ou 28-2) à la flèche (28-2 ou bien 28-1) opposée respective.

2. Procédé selon la revendication 1, dans lequel des valeurs déterminées par une détection de valeurs réelles (60) sont transmises à un dispositif de traitement de données (62) et sont comparées à des valeurs de consigne stockées dans celui-ci, et une rotation et/ou un pivotement du dispositif de distribution (14) autour du point de suspension (30) se produit à partir de la différence résultant des valeurs réelle et de consigne.

3. Procédé selon la revendication 1 ou 2, dans lequel la rotation et/ou le pivotement du dispositif de distribution (14) est réalisé(e) au moyen d'un entraînement rotatif (32) disposé entre la machine de distribution (10) et/ou sa section d'appui (24) ou son châssis de machine (22) et la partie centrale (26), ou par des mouvements de réglage linéaires d'un entraînement linéaire disposé entre la machine de distribution (10) et/ou sa section d'appui (24) ou son châssis de machine (22) et la partie centrale (26).

4. Procédé selon l'une quelconque des revendications 1 à 3, dans lequel la rotation et/ou le pivotement du dispositif de distribution (14) se fait dans le sens des aiguilles d'une montre ou dans le sens inverse des aiguilles d'une montre.

5. Procédé selon l'une quelconque des revendications 1 à 4, dans lequel la détection de valeurs réelles (60) se fait par le biais de capteurs de distance (64) et/ou de capteurs à ultrasons associés au dispositif de distribution (14).

6. Procédé selon l'une quelconque des revendications 1 à 5, dans lequel une adaptation à un contour de sol (56) se fait par un pivotement symétrique ou approximativement symétrique des flèches (28) autour d'axes de pivotement horizontaux (34) et une rotation du dispositif de distribution (14) autour d'un point de suspension (30).

7. Procédé selon la revendication 6, dans lequel le pivotement symétrique ou approximativement symétrique des flèches (28) et la rotation et/ou le pivotement du dispositif de distribution (14) se font à peu près en même temps.

8. Procédé selon la revendication 6, dans lequel le pivotement symétrique ou approximativement symétrique des flèches (28) et la rotation et/ou le pivotement du dispositif de distribution (14) se font les uns après les autres.

9. Procédé selon l'une quelconque des revendications 1 à 8, dans lequel au moins un actionneur (42) est relié à l'une au moins des flèches (28-1 ou 28-2), et celle-ci est pivotée autour de l'axe horizontal de pivotement (34) en raison d'un changement de position et/ou en longueur de l'actionneur (42).

10. Procédé selon la revendication 9, dans lequel ledit au moins un actionneur (42) est relié aux deux flèches (28-1 et 28-2), dans lequel l'une au moins des flèches (28-1 et/ou 28-2) est pivotée autour de l'axe horizontal de pivotement (34) en raison d'un changement de position et/ou en longueur de l'actionneur (42).
